(19) Europäisches Patentamt
European Patent Office
Office européen des brevets

(11) EP 0 296 610 B1

(12) # EUROPEAN PATENT SPECIFICATION

(45) Date of publication and mention of the grant of the patent:
**05.03.1997 Bulletin 1997/10**

(51) Int Cl.[6]: **C08K 9/04**, C08K 3/26, B01F 3/12

(21) Application number: **88110107.5**

(22) Date of filing: **24.06.1988**

(54) **Glycol dispersion of calcium carbonate**

Dispersion von Kalzium-Karbonat in Glycol

Dispersion de carbonate de calcium en glycol

(84) Designated Contracting States:
**DE FR GB LU NL**

(30) Priority: **24.06.1987 JP 157379/87**
**24.06.1987 JP 157380/87**

(43) Date of publication of application:
**28.12.1988 Bulletin 1988/52**

(73) Proprietor: **MARUO CALCIUM COMPANY LIMITED**
**Akashi-shi Hyogo-ken (JP)**

(72) Inventors:
- **Minayoshi, Shiro**
  **Akashi-shi Hyogo-ken (JP)**
- **Saitoh, Naofumi**
  **Akashi-shi Hyogo-ken (JP)**
- **Higashi, Toshio**
  **Akashi-shi Hyogo-ken (JP)**
- **Ebisuya, Noritsugu**
  **Akashi-shi Hyogo-ken (JP)**

(74) Representative: **VOSSIUS & PARTNER**
**Postfach 86 07 67**
**81634 München (DE)**

(56) References cited:
**EP-A- 0 000 415** **AU-A- 453 438**

Remarks:
The file contains technical information submitted after the application was filed and not included in this specification

EP 0 296 610 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a glycol dispersion of calcium carbonate. More particularly it relates to a dispersion of calcium carbonate in a a glycol such as ethylene glycol which is used as a raw material in the manufacture of polyesters which in turn may be employed especially for the production of films or fibers. The glycol dispersion of calcium carbonate comprises a grade of calcium carbonate having good dispersion stability in glycol and good affinity to polyesters and a glycol such as ethylene glycol, propylene glycol and butylene glycol. The purpose of the invention is the improvement of the friction coefficient of the polyester.

Polyesters manufactured today commercially, polyethylene terephthalate (hereinafter called "PET") in particular have excellent physical and chemical properties, and are widely used for the manufacture of fibers, films and other moldings.

Meanwhile, however, it is known that they have the shortcoming of insufficient sliding property in molding, further processing and handling of the manufactured articles. Thus, the workability of these polyesters is inferior, which in turn lowers the commercial value of the products. These drawbacks are mostly attributable to the high friction coefficient of the polyester itself. To overcome such disadvantages, there have been proposed to date many methods which essentially consist in incorporating fine particles into the polyester and imparting the right degree of roughness to the surface of a molded article to thereby improve its surface sliding property. The affinity of such fine particles to the polyester is, however, insufficient and therefore the transparency and wear resistance of the films or fibers manufactured by such methods were invariably poor.

As means of improving the surface properties of polyesters the following have been hitherto known, among others:

(1) a method of precipitating a part or all of the catalyst used for the synthesis of the polyester in the reaction process (internal particle precipitation method)
(2) a method of adding fine particles, e.g. calcium carbonate or silicon dioxide in the course of or after polymerization (external particle adding method).

The internal particle precipitation method (1) has the drawback that the amount and the size of the particles is difficult to control and the formation of coarse particles is difficult to prevent because in this method particles are to be formed during reaction, although the affinity of the polyester to the particles is quite good, for such particles consist of a metal salt of a polyester component.

The external particle adding method (2), which consists in adding fine particles of an inorganic compound insoluble in and inert to the polyester such as titanium dioxide, silica, talc, kaolin and calcium carbonate during or after polymerization, is superior to the method (1) described above with regard to improved sliding properties, if the particle size and the amount of the inorganic compound added are properly selected and coarse particles are removed by classification in advance. However, the affinity of the inorganic particles to the polyester as an organic substance is insufficient. Hence separation occurs at the interface boundary between particles and polyester in the course of stretching this causing transparency and wear resistance problems which are still to be solved. To improve the affinity of the inorganic compound to the polyester, there has been proposed a method of surface treatment by a coupling reaction between a silane compound and a titanate compound, but this method, too, involves various problems: it is complicated and the effect attainable is not as good as expected.

Also, to improve the dispersibility of such inorganic compounds in a polyester a method of preparing a glycol slurry of fine particles of the inorganic compound and adding it in the process of polyester manufacture has been proposed. However, the dispersibility as well as long-term dispersion stability of such inorganic compounds in glycol is still unsatisfactory. When the glycol with such an inorganic compound in fine powder form suspended therein is stored for a long period, the inorganic compound may precipitate to form deposits or hard cakes which are difficult to redisperse or fine particles of the inorganic compound agglomerate in the glycol or in the course of manufacture of the polyester. The presence of agglomerated coarse particles in the polyester can cause yarn breakage in the spinning process, formation of the so-called "fish-eye" and, in particular, drop-out or lowering of the S/N ratio when it is used to manufacture films for magnetic tapes. There has been a strong need for the development of fine particles which do not form coarse particles.

It is a primary object of the present invention to provide a glycol dispersion of calcium carbonate having good dispersion stability and good affinity to polyesters.

Another object of the present invention is to provide a glycol dispersion of calcium carbonate having good dispersion stability, having good affinity to polyesters, uniform particle size, and narrow particle size distribution wherein the particle size is freely selectable.

After extensive and intensive studies in order to attain the aforementioned objects, the present inventors have discovered that a grade of calcium carbonate having a good dispersion stability in glycol and a good affinity to polyester can be obtained by wet grinding in glycol calcium carbonate surface-treated with a treating agent of a special composition, and and thus completed the present invention.

Figures 1 and 2 are schematic views showing the way of wet grinding precipitated calcium carbonate.

Figures 3 and 4 are further schematic views showing the way of wet grinding ground calcium carbonate.

Figures 5 and 6 show precipitated calcium carbonate of the present invention obtained by wet grinding.

Figure 7 shows precipitated calcium carbonate of $R_2$>10.

Figures 8 through 16 are electron microscope pictures showing the particle structure of calcium carbonate.

The present invention relates to a glycol dispersion of calcium carbonate prepared by wet grinding a glycol slurry composed of glycol and calcium carbonate whose surface was treated with (A) a copolymer of at least one α,β-monoethylenically unsaturated carboxylic acid or a salt thereof with at least one α,β-monoethylenically unsaturated carboxylic acid ester and/or (B) a salt of a copolymer of at least one α,β-monoethylenically unsaturated carboxylic acid with at least one α,β-monoethylenically unsaturated carboxylic acid ester.

The surface treating agents of a specific composition comprise (A) a copolymer of an α,β-monoethylenically unsaturated carboxylic acid or an alkali metal salt, alkaline earth metal salt, ammonium salt or amine salt thereof obtained by neutralizing the carboxylic groups of the α,β-monoethylenically unsaturated carboxylic acid with an α,β-monoethylenically unsaturated carboxylic acid ester; or (B) a salt of the aforesaid copolymer of an α,β-monoethylenically unsaturated carboxylic acid with an α,β-monoethylenically unsaturated carboxylic acid ester. (A) and (B) can be used either alone or in combination.

The α,β-monoethylenically unsaturated carboxylic acid referred to in the present invention is at least one α,β-unsaturated monocarboxylic acid such as acrylic acid, methacrylic acid and crotonic acid or α,β-unsaturated dicarboxylic acid such as maleic acid, fumaric acid and itaconic acid. Typical examples of α,β-monoethylenically unsaturated carboxylic acid esters are alkyl esters of acrylic acid or methacrylic acid, which may also have alkoxy, cyclohexyl, hydroxyl or aromatic substituents. Polyalkylene glycol monoacrylates or monomethacrylates may also be used.

The calcium carbonate used in the present invention roughly falls into two types in general, namely ground calcium carbonate and precipitated calcium carbonate (synthetic calcium carbonate).

The ground calcium carbonate is manufactured by mechanically pulverizing limestone and subsequently classifying the resulting powder into various grades. This has the advantage of relatively low manufacturing costs, but the disadvantage of a wide particle size distribution and of the impossibility of obtaining a powder fineness beyond a certain limit by the present pulverizing and classifying techniques.

In contrast thereto, precipitated calcium carbonate is a synthetic material manufactured by alternative chemical processes. An example is the carbon dioxide process in which calcium carbonate is made by reacting quick lime obtained by calcining limestone at a high temperature with water to prepare lime milk, and then passing the carbon dioxide formed when limestone is calcined through the milk of lime. Further examples are the lime soda process in which the milk of lime is caused to react with sodium carbonate, and the soda process in which calcium chloride is caused to react with sodium carbonate. Although there are some differences depending on the process used, precipitated calcium carbonate has, in general, a narrower particle size distribution than ground calcium carbonate, also allowing free selection of the desired particle size (primary particle size).

By using precipitated calcium carbonate or ground calcium carbonate according to the present invention, it is possible to accomplish the objects of the invention, namely:

(i) manufacture of calcium carbonate with good dispersibility and long-term dispersion stability in glycol, and
(ii) manufacture of calcium carbonate having good affinity to the polyester and scarcely tending to separate in the interfacial boundary between such particles and polyester so that no voids are formed.

Hence, either type of calcium carbonate may be selected, depending on the intended use, costs and desired particle size.

For instance, the product manufactured according to the present invention with ground calcium carbonate as starting material may well be useful for the manufacture of relatively thick polyester films for audio tapes or food packaging films of the standard grade. Especially food packaging films with their specific nature are required to be highly transparent, although they are subject to quite severe price restrictions compared to other PET films used in other fields.

When cheap, large-sized particles are used for this kind of films, large voids are formed due to insufficient affinity of the polyester resin to such inorganic particles, and the diffusion of light on the film surface is increased to markedly detract from the transparency. Hence inorganic particles were found to be difficult to use in sufficiently improving the friction coefficient in the molding and subsequent processing of films. When the present invention is applied in the manufacture of food packaging films, it is possible to achieve sufficient improvement of the friction coefficient of the film without undue loss in the transparency of the film even when calcium carbonate of a relatively large particle size is used, since the affinity of the calcium carbonate to the polyester resin is improved.

According to the present invention, there are roughly the following two alternatives of treating calcium carbonate particles with a surface treating agent.

(1) Dry treating method

A method of manufacturing surface-treated particles of calcium carbonate wherein pulverized calcium carbonate is charged into a treating vessel provided with rotatory stirring blades such as a Henschel mixer and stirred intensively, and an aqueous or organic solvent dilute solution of a surface-treating agent is added dropwise to the powder for dry surface treatment of the particles.

(2) Wet treating method

A method of manufacturing surface-treated particles of calcium carbonate wherein an aqueous or organic solvent dilute solution of a surface-treating agent is added to a concentrated aqueous suspension of ground calcium carbonate, a concentrated aqueous suspension of precipitated calcium carbonate or a water-containing press cake. The mixture is subsequently vigorously stirred to prepare a concentrated slurry of surface-treated calcium carbonate and, if necessary, the concentrated surface-treated calcium carbonate slurry is passed through a wet grinder such as a sand grinder for an even more thorough surface-treatment. Then the above-mentioned surface-treated concentrated calcium carbonate is dried in a dryer such as a drum dryer and pulverized by a grinder.

Although the object of the present invention is attainable by either of the above-mentioned two methods, it is preferred to use the wet treating method (2) to better achieve the object of the present invention by uniformly treating the surface of the calcium carbonate particles with the surface treating agent.

Although the surface treating agent used for surface-treating the calcium carbonate particles by these methods may be one described above, it is desirable that a chemical reaction take place between the surface treating agent and the surface of calcium carbonate particles resulting in a powerful bonding and thus in an even more effective surface-treatment. Hence preference is given to surface-treating agents having active carboxyl groups reacting with calcium carbonate. When using an alkali metal salt, alkaline earth metal salt, ammonium salt or amine salt of an $\alpha,\beta$-monoethylenically unsaturated carboxylic acid copolymerized with an $\alpha,\beta$-monoethylenically unsaturated carboxylic acid ester, the total amount of carboxyl groups neutralized with an alkali metal, alkaline earth metal, ammonium or amine is less than 100%, preferably not more than 90%, of the total carboxyl groups contained in the aforesaid copolymer. The same also applies to copolymers of an $\alpha,\beta$-monoethylenically unsaturated carboxylic acid with an ester thereof which are neutralized to a salt.

Also, the proportion of the $\alpha,\beta$-monoethylenically unsaturated carboxylic acid ester to the copolymer as a whole is preferably not less than 2 mol% and not more than 95 mol%. When this proportion is less than 2 mol% satisfactory resultsmay not be obtainable with respect to the affinity of calcium carbonate to the polyester, and when it is higher than 95 mol%, the dispersion stability of the concentrated aqueous slurry of the surface-treated calcium carbonate, when processed by the aforesaid surface treating method (2),may be unsatisfactory.

As to the required amount of the surface-treating agent, it is preferably not less than 0.01 weight % and not more than 30 weight % (as 100% pure). When it is less than 0.01 weight % the effect of the treatment may be unsatisfactory and when it is higher than 30 weight %, the costs might become too high and the quality of polyester itself poor.

Further, although there is no particular limitation with respect to the temperature at which calcium carbonate particles are treated with such surface-treating agent, the treating temperature must not be less than 30°C and preferably not less than 50°C for an improved surface treatment effect. To raise the surface treating temperature, any of the known methods may be used, for example, when the treating method (1) is used, by passing hot water or steam through the external jacket of the treating vessel such as a Henschel mixer and, when the treating method (2) is used, by external heating of the surface-treated calcium carbonate slurry.

The calcium carbonate particles surface-treated by any of the aforesaid methods are then mixed under stirring with the glycol which is intended to be used in the manufacture of a polyester such as ethylene glycol, propylene glycol and butylene glycol for the preparation of a glycol suspension of calcium carbonate. This glycol suspension is then passed through a wet grinder for grinding and dispersing the calcium carbonate, whereby the glycol suspension of calcium carbonate of the present invention is prepared. As to the solids concentration of calcium carbonate in such glycol suspension, there is no particular limitation but it is desirably not less than 20 weight% and not more than 80 weight% in view of costs, grinding efficiency and viscosity of the glycol suspension.

The wet-type grinder used in the process of the present invention for wet grinding is a device for grinding the dispersion of the material to be treated under reflux or being passed therethrough under mechanical stirring by means of discs, bars or screws with natural or synthetic minute particles of mineral sand, minute particles of hard glass, hard plastic or metal which are contained as grinding medium in the vessel of a device such as an attritor, Dynomill and universal mill. The average diameter of the aforesaid minute particles used in wet-type grinders should preferably be not more than approximately 5 mm.

There is no particular limitation with respect to the conditions for grinding and dispersing the glycol suspension. The solids concentration of the glycol suspension, the revolutions per minutes of the agitating blades of the wet-type

grinder, the charging rate of the grinding medium and the feeding rate of the glycol dispersion may be adjusted properly.

The glycol dispersion of calcium carbonate prepared by the method of the present invention has not only good dispersion stability of the calcium carbonate in the glycol but also extremely good affinity of the calcium carbonate to the polyester in the finished product.

However, in order to meet the increasingly diversified demands of modern society, studies have been made to develop new materials which are more suitable in many fields. This also applies to polyesters and in particular to PET films.

To keep pace with the development of high quality audio systems and high fidelity video decks, still higher audio and video properties are being requested by users in general. The tapes too, have to meet not only the standard grade requirements but high grade and even super-high grade requirements. Also, an 8 mm video deck has meanwhile appeared on the market and the PET film used as material of the magnetic tape therefor is required to be so extremely thin as never before to have a still higher surface smoothness and also good surface slidability, which are contradictory physical properties.

To manufacture such high performance polyester films to meet the needs of modern society, that is, polyester films having a high slidability in spite of being extremely thin and having high surface smoothness, it is necessary to create a very fine and uniform irregularity in the surface of the film and, in order to accomplish this object, the inorganic particles used in the process of polymerizing the polyester are required to have the following properties in addition to those described above in connection with the objects (i) and (ii) of the present invention:

(iii) uniformity of the particles in size or diameter,
(iv) substantially no content of coarse or ultrafine particles (narrow particle size distribution in glycol), and
(v) free selectability of the particle size.

Ground calcium carbonate, however, has the following major shortcomings when used in the manufacture of high-performance polyester films.

Hitherto, when a commercially available grade of ground calcium carbonate was used in the manufacture of polyester products, the methods (1) and (2) described below were often and generally used.

(1) A method wherein a commercially available grade of ground calcium carbonate was surface-treated with fatty acid, resin acid or alkali metal salts thereof, air-classified repeatedly to eliminate coarse particles not less than 5µm in particle size, and then dispersed in glycol.
(2) A method wherein a commercially available grade of ground calcium carbonate was dispersed in glycol and then, after being subjected to wet-grinding by a wet grinder such as sand mill, is wet-classified to eliminate coarse particles not less than approximately 3 µm in particle size.

In case of (1);

(a) Even if a particularly fine grade of commercially available ground calcium carbonate is chosen and air-classified, its particle size distribution before classification is very broad containing coarse particles of approximately 4-6 µm in size as shown in Figure 8. Even if a commercially available air classifier of the highest performance is used and classification is done repeatedly, it is difficult to totally eliminate coarse particles up to 3 µm in size. An electron microscopic picture (x 1, 000) of a particularly fine grade of commercially available ground calcium carbonate (Super # 2300, manufactured by Maruo Calcium Co., Ltd) is shown in Figure 8.
(b) When ground calcium carbonate is surface-treated with fatty acid, resin acid or an alkali metal salt thereof for improving air classification efficiency, the dispersion stability in glycol is adversely affected due to poor compatibility between such surface-treating agents and the glycol.
(c) Since there is a limit to the fineness of commercially available grades of ground calcium carbonate, preparation of calcium carbonate of the desired particle size is impossible even when using most elaborate air classification.

In case of (2);

(a) Since ground calcium carbonate as starting material is attrited using a wet-type grinder, it is relatively easy to obtain calcium carbonate of the desired average particle size compared with any of the methods described in (1) above. However, since the mode of grinding is attrition, a high portion of the particles are unnecessarily fine resulting in a wide particle size distribution. This means an undesirable decrease of the quantity of calcium carbonate contributing to improving the frictional properties of polyester, which is a major object of the present invention, and, worse, such ultrafine particles tend to reagglomerate in the glycol to form coarse secondary particles, thus possibly deteriorating the physical properties of polyester films or polyester fibers.

(b) Even when wet grinding is performed with ground calcium carbonate as starting material, part of the coarse particles 4-6µm in size contained in the ground calcium carbonate may remain in the calcium carbonate after grinding due to a phenomenon called "short pass" (i.e. coarse particles in the material to be ground are discharged from a wet-type grinder substantially unground). Even if an attempt is made to eliminate such coarse particles using a wet-type centrifugal classifier, the size of particles which can be eliminated in an economically acceptable manner is down to approximately 1 µm, only.

It is, is, therefore, not considered to be advisable to use ground calcium carbonate as starting material in preparing a glycol dispersion of the present invention for use in the manufacture of the aforesaid high performance polyester films. It is advisable to select as starting material a grade of precipitated calcium carbonate of a specific dispersibility and particle size (distribution). A high grade of calcium carbonate which is in fact suitable for the manufacture of high performance polyester films can only be prepared by wet grinding the aforesaid grade of precipitated calcium carbonate in glycol under specific conditions which calcium carbonate has been surface-treated with a treating agent of a specific composition according to the present invention.

The method of preparing the aforesaid high grade calcium carbonate is described below in detail.

The high grade calcium carbonate suitable for use in the manufacture of high performance polyester films according to the present invention is a glycol dispersion of precipitated calcium carbonate consisting of glycol and precipitated calcium carbonate meeting the requirements described below under (a) and (b) and surface-treated with a surface-treating agent of the present invention composed of (A) a copolymer and/or (B) a salt of a copolymer, mixing the thus surface-treated calcium carbonate with glycol to form a glycol slurry and then wet-grinding it under conditions meeting the requirements described below under (c).

(a) The primary particle size $D_1$ calculated by the following formula (1) from the specific surface area $S_1$ measured by the BET method shall be not less than 0.1 µm.

$$Dx = 60{,}000 / 2.7\ Sx \qquad (1)$$

Where:

Dx = the average particle size (µm) of precipitated calcium carbonate calculated from the specific surface area measured by the BET method.

Sx = the specific surface area ($cm^2$ / g) of precipitated calcium carbonate measured by the BET method.

(b) The ratio $R_1$ of the 50 % weight average particle size $d_1$ of the particle size distribution measured in an aqueous system using a Light Transmission Centrifugal Precipitation-type Particle Size Distribution Measuring Device SA-CP-2 (manufactured by Shimazu Seisakusho Ltd.) to the above-mentioned value $D_1$ shall satisfy the following formula (2).

$$R_1 = d_1 / D_1 \leqq 7 \qquad (2)$$

(c) The ratio $R_2$ of the above-mentioned primary particle size $D_1$ to the primary particle size $D_2$ calculated by the above-mentioned formula (1) from the specific surface area $S_2$ of precipitated calcium carbonate measured by the BET method shall satisfy the following formula (3)

$$R_2 = D_1 / D_2,\ 1 < R_2 \leqq 10 \qquad (3)$$

A first feature of the aforesaid glycol dispersion of precipitated calcium carbonate referred to as high grade calcium carbonate is the composition of the specific surface treating agent, as already mentioned above.

A second feature is that as material to be wet-ground, precipitated calcium carbonate of a specific particle size range and dispersibility is used. Using precipitated calcium carbonate of a specific dispersibility and particle size range has the following advantages compared to ground calcium carbonate.

The schematic views of the shapes of particles before and after grinding when precipitated calcium carbonate and ground calcium carbonate are used as material to be wet-ground are shown in Figures 1, 2, 3 and 4, respectively.

Figure 1 shows that when precipitated calcium carbonate of more than a given dispersibility is used, the grinding

energy applied to the calcium carbonate particles in the wetgrinding process is first consumed in breaking and dispersing the agglomeration of the primary particles of weak bonding power since the precipitated calcium carbonate is in the form of soft agglomerates of primary particles (1) substantially uniform in particle size. Unless wet grinding is continued for too long a time and too vigorously, there is little risk for the individual primary particles (1) to be broken or unnecessary ultrafine particles to be formed. Consequently, as shown in Figure 2, calcium carbonate of uniform particle size and narrow particle size distribution as shown in Figure in 2 is obtainable. In contrast thereto, when ground calcium carbonate is used as material to be ground, as shown in Figures 3 and 4, the grinding energy applied to the calcium carbonate particles in the wet grinding process is partly used for disintegrating and grinding them into coarse primary particles made up of more than one type of coarse primary particles (2). However, since breaking and grinding of the coarse primary particles require quite some grinding energy, the grinding energy applied is likely to be consumed for superficially grinding the coarse primary particles (2) resulting in a large amount of unnecessarily fine particles (3).

As is apparent from the above, the use of precipitated calcium carbonate of a specific range of particle size and a specific degree of dispersion allows preparation of calcium carbonate particles substantially uniform in size and narrow in size distribution compared to the particles obtained from ground calcium carbonate.

According to the present invention, the primary particle size of precipitated calcium carbonate used as material to be wet-ground may be acceptable if the diameter $D_1$ of its primary particle calculated by the following formula (1) from the specific surface area $S_1$ measured by the BET method is not less than 0.1 μm.

$$Dx = 60{,}000 / 2.7\ Sx \qquad (1)$$

Where:

Dx = Average particle size (μm) of precipitated calcium carbonate calculated from the specific surface area measured by the BET method: and

Sx = Specific surface area ($cm^2$ / g) of precipitated calcium carbonate measured by the BET method.

When the diameter of the primary particle of the precipitated calcium carbonate used as material to be wet-ground is less than 0.1 μm, larger secondary particles (each being an agglomerate of the primary particles) form due to the increased agglomerating potential between the primary particles. These secondary particles are difficult to disintegrate and redisperse even by economically acceptable repeated grinding and, worse, since the grinding energy applied is not solely used for disintegrating agglomerates but also for attriting the primary particles, the size of the primary particles becomes increasingly non-uniform.

As to the degree of dispersion of the precipitated calcium carbonate to be used as material to be ground, the ratio $R_1$ of the 50 % weight average particle size $d_1$ for the particle size distribution measured in an aqueous system using a Light Transmission Centrifugal Precipitation-type Particle Size Distribution Measuring Device to the diameter of the primary particle $D_1$ calculated from the specific surface area $S_1$ measured of precipitated calcium carbonate by the BET method may be acceptable if $R_1 = d_1/D_1$, $R_1 \leqq 7$, preferably $R_1 \leqq 4$. If a grade of precipitaed calcium carbonate, whose $R_1$ is higher than 7, is used as material to be wet-ground, such precipitated calcium carbonate is composed of large and firmly agglomerated secondary particles. Hence the secondary particles cannot be easily disintegrated and redispersed in the process of wet grinding and as in the case where ground calcium carbonate is used as meterial to be wet-ground, the ground matter is a mixture comprising both coarse secondary particles and unnecessarily finely ground ultra-fine particles. Thus the object of the present invention to provide a highgrade calcium carbonate suitable for use in the manufacture of high performance polyester films cannot be attained.

A third feature of the present invention are the specific conditions for the process of wet grinding precipitated calcium carbonate.

The specific wet grinding conditions according to the present invention are such that the ratio $R_2$ of the primary particle size $D_1$ to $D_2$ calculated by the above-mentioned formula (1) from the specific surface areas of the precipitated calcium carbonate before and after wet grinding is:

$$R_2 = D_1 / D_2,\ 1 < R_2 \leqq 10$$

Where:

$D_2$ = The diameter (μm) of the primary particles of wet-ground precipitated calcium carbonate calculated from the specific surface area $S_2$ measured by the BET method (Figures 5 and 6).

In contrast thereto, when the grinding conditions are so selected that $R_2$ is higher than 10, excessive grinding may result in marked attrition of the surface of the primary particles and in the unfavourable formation of an increased amount of unnecessary ultrafine particles (3) (Figures 5 and 7).

Hence, calcium carbonate not containing a large amount of unnecessary ultrafine particles can be obtained by means of wet grinding under the aforesaid specific conditions.

Calcium carbonate prepared by these methods, that is, calcium carbonate which combines the three aforementioned features is a highgrade calcium carbonate suitable for the manufacture of high performance polyester films and will also have the properties sought by polyester manufacturers and manufacturers of electric machines and appliances.

Precipitated calcium carbonate used as material to be wet-ground for the manufacture of such a high grade calcium carbonate is a synthetic calcium carbonate prepared by chemical processes such as the so-called carbon dioxide process in which milk of lime made by reacting quick lime obtained by calcining limestone with water, and then passing the carbon dioxide formed in the calcination of limestone through the milk of lime, the limesoda process in which sodium carbonate is caused to react with milk of lime and the soda process in which sodium carbonate is caused to react with calcium chloride.

The manufacturing process is not critical, but it is evident that the carbonation method or manufacturing method must be such that the precipitated calcium carbonate satisfies the aforesaid two requirements of $0.1 \leqq D_1$, $R_1 \leqq 7$.

For the manufacture of such high grade calcium carbonate from precipitated calcium carbonate by the carbon dioxide process, the following methods are proposed without limiting the scope of the invention:

(1) A method of preparing an aqueous suspension of precipitated calcium carbonate in extremely fine powder form with a particle size of less than 0.1 µm in a usual manner, converting it into an equivalent aqueous dispersion through proper pH control, passing carbon dioxide through or dripping primarily carbonated milk of lime (milk of lime partially carbonated in advance) into the aqueous dispersion of the precipitated calcium carbonate in extremely fine powder form so that the pH of the system is controlled to be within the specified range, and thus causing the particles to grow with the calcium carbonate in extremely fine powder form as nuclei (Japanese Patent Examined Publication No. 43331/83).

(2) The method described above under (1) with the primarily carbonated milk of lime being substituted by milk of lime.

(3) A method of spraying milk of lime in an atmosphere of carbon dioxide under specific conditions suitable for the carbonation reaction to proceed. An aqueous suspension of calcium carbonate in extremely fine powder form with a particle size of less than 1 µm is obtained. After adding lime milk to the aqueous suspension of the calcium carbonate in extremely fine powder form at a fixed rate, the resulting mixture is resprayed into the atmosphere of carbon dioxide and this procedure is repeated. The particles grow progressively with the calcium carbonate in extremely fine powder form as nuclei (Japanese Patent Examined Publication No. 28397/79)

(4) A method of manufacturing precipitated calcium carbonate by passing carbon dioxide through milk of lime, wherein a strontium or barium salt is used in the carbonation process (Japanese Patent Non-examined Publication No. 69425/84).

(5) A method of stirring an aqueous suspension of precipitated calcium carbonate prepared in a usual manner and having its pH controlled within a specific range to thereby improve the degree of dispersion of the precipitated calcium carbonate.

According to the present invention, the primary particle size of precipitated calcium carbonate calculated from the specific surface area measured by the BET method is the primary particle size of precipitated calcium carbonate not yet wet-ground and not yet taken up in the suspending or dispersing medium, such as water or glycol. That is to say it is the precipitated calcium carbonate in powder form obtained by drying an aqueous suspension of precipitated calcium carbonate made by carbonation, for instance by the carbon dioxide process or a solution process such as the lime soda process and soda process. The 50 % weight average particle size $d_1$ measured by the Light Transmission Centrifugal Precipitation-Type Particle Size Distribution Measuring Device was determined as follows:
Measuring Device: SA-CP-2 (manufactured by Shimazu Seisakusho Ltd.)

Measuring method:

Solvent: 0.2 % aqueous solution of sodium hexamethalate
Preliminary dispersion: Shaking for 10 minutes by KM Shaker Model V-5 (manufactured by Iwaki Co., Ltd.)
Speed of particle size measuring device: 1,200 rpm.
Height of liquid level: 1 cm above bottom of the cell Measuring temperatures: 25 °C
Measuring method: Calculation to be made by the following formula
Result of particle size distribution measurement (Example)

| Particle size (µm) | Cumulative part. size distrib. (%) |
|---|---|
| -6 | 0.6 |
| 6 - 5 | 1.0 |
| 5 - 4 | 1.9 |
| 4 - 3 | 2.9 |
| 3 - 2 | 7.3 |
| 2 - 1 | 22.1 |
| 1 - 0.8 | 38.9 |
| 0.8- 0.6 | 62.4 |
| 0.6- 0.5 | 73.7 |
| 0.5- 0.4 | 84.5 |
| 0.4- 0.3 | 100.0 |
| 0.3- 0.2 | - |
| 0.2- | - |

$$0.6\ \mu m + [(62.4\ \% - 50\ \%) / (62.4\ \% - 38.9\ \%)] \times (0.8 \mu m - 0.6\ \mu m) = 0.706\ \mu m$$

Hence, the 50 % weight average particle size for the above particle size distribution is assumed to be 0.706 µm.

The present invention is described below in more detail with specific examples and control examples without limiting the scope of the invention.

The grades of calcium carbonate used in the examples and control examples are as described below.

Calcium carbonate A:

Furnace exhaust gas containing 25 % of $CO_2$ (hereinafter called "the $CO_2$ gas") was passed through 7.2 $m^3$ of milk of lime, having a temperature of 30°C and a specific gravity of 1.080 g/$cm^3$ at a rate of 2 $m^3$/minute. The gas supply was stopped when the pH of the system reached 6.8 and an aqueous dispersion (solids concentration 16.8%) of the precipitated calcium carbonate A was obtained. The specific surface area measured by the BET method and the particle size distribution of thereof are shown in Table 1.

Calcium carbonate B:

A commercially available grade of ground calcium carbonate (Super # 1700; manufactured by Maruo Calcium Co., Ltd.) was used as the calcium carbonate B. Its specific surface area was 1.68 $m^2$/g (when measured by the so-called constant pressure ventilating measuring method) and 3.56 $m^2$/g (BET method).

Calcium carbonate C:

$CO_2$ gas was passed through 7.2 $m^3$ of milk of lime having a temperature of 15°C and a specific gravity of 1.070 g/$cm^3$ at a rate of 20 $m^3$/minute until completion of carbonation. Then the system's temperature was adjusted to 50± 5°C and its pH to 10 ± 0.5 by the use of the $CO_2$ gas and milk of lime and after subsequent stirring for 24 hours a viscous aqueous dispersion of the precipitated calcium carbonate C was obtained. The specific surface area measured by the BET method and the particle size distribution thereof are shown in Table 1.

Calcium carbonate D:

To 4 $m^3$ of an aqueous dispersion of the precipitated calcium carbonate C with its temperature adjusted to 50 °C±5 °C, lime milk with a specific gravity of 1.070 g/$cm^3$ was added dropwise at a rate of 0.6 $m^3$/hour while simultaneously passing $CO_2$ gas through the system, the pH of the system being kept at 10 ± 0.5 under stirring. The dropwise addition of the milk of lime was terminated when the total amount added was 32 $m^3$. The $CO_2$ gas was passed through the system until its pH reached 7.0 and thus an aqueous dispersion of the precipitated calcium carbonate D was obtained. The specific surface area measured by the BET method and the particle size distribution thereof are shown in Table 1.

Calcium carbonate E:

Milk of lime with the specific gravity of 1.070 g/$cm^3$ was added dropwise to 3 $m^3$ of an aqueous dispersion of precipitated calcium carbonate (solids concentration 14.9%), whose temperature was adjusted to 50°C ±5 °C, at a rate of 0.6 $m^3$/hour While simultaneously passing $CO_2$ gas therethrough under stirring, the pH of the system being kept at 10 ± 0.5. When the total amount of the milk of lime added was 6.0 $m^3$, no more lime milk was added, while the $CO_2$ gas supply was continued until the system's pH reached 7.0, and an aqueous dispersion of the precipitated calcium carbonate E was obtained. The specific surface area measured by the BET method and the particle size distribution thereof are shown in Table 1.

Calcium carbonate F:

To 43 $m^3$ of milk and lime with the specific gravity of 1,080 g/$cm^3$, 12 kg of strontium carbonate were added and $CO_2$ gas was passed therethrough at a rate of 5 $m^3$/minute under stirring. The reaction was terminated when the pH of the system was 8.0. Then, with the system's temperature kept at 60°C ±5 °C stirring was continued for the alkali residues to be evaluated and by using some of the $CO_2$ gas, the system's pH was adjusted to 10± 1 and after stirring for 24 hours it was lowered to 7.0 using the $CO_2$ gas. Thus an aqueous dispersion of the precipitated calcium carbonate F was obtained. The specific surface area measured by the BET method and the particle size distribution of thereof are shown in Table 1.

Surface treating agent 1:

A copolymer of 50 mol % of acrylic acid with 50 mol % of polyethylene glycol monomethacrylate.

Surface treating agent 2:

Ammonium salt of a copolymer of 80 mol % of acrylic acid and 20 mol % of propylacrylate with 85% of the total carboxyl groups of the copolymer neutralized with ammonium.

Surface treating agent 3:

A copolymer of 30 mol % of acrylic acid and 70 mol % of hydroxyethylacrylate.

Surface treating agent 4:

Sodium salt of the surface treating agent 3 with 50% of the total carboxyl groups of the copolymer neutralized with sodium.

Surface treating agent 5:

Amine salt of a copolymer of 70 mol % of acrylic acid, 10 mol % of maleic acid and 20 mol % of methoxyethylacrylate, with 40 % of the total carboxyl group of the copolymer neutralized with amine.

Surface treating agent 6:

Sodium salt of a copolymer of 70 mol % of acrylic acid, 10 mol % of itaconic acid and 20% of cyclohexylacrylate, with 40% of the total carboxyl groups of the copolymer neutralized with sodium.

Surface treating agent 7:

Sodium salt of a copolymer of 90 mol % of acrylic acid and 10 mol % of methoxypolyethylene glycol polypropylene glycol monomethacrylate with 100 % of the carboxyl groups of the copolymer neutralized with sodium.

Surface treating agent 8:

Ammonium salt of a copolymer of 50 mol % of acrylic acid, with 40 mol % of the polyethylene glycol monomethacrylate and 10 mol % of

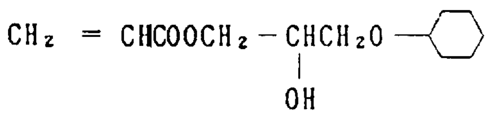

with 50% of the total carboxyl groups of the copolymer neutralized with ammonium.

Surface treating agent 9:

Sodium salt of an acrylic acid polymer with 100% of the carboxyl groups contained therein neutralized with sodium.

Surface treating agent 10: Sodium stearate

Surface treating agent 11:

Monomer of ethylene glycol monomethacrylate.

Table 1

| | Calcium carbonate | | | | |
|---|---|---|---|---|---|
| | A | C | D | E | F |
| Spec.surf.area by BET method $S_1$ ($cm^2/g$) | 55,000 | 340,000 | 28,500 | 14,200 | 48,600 |
| $D_1$ calculated from $S_1$ ( μm) | 0.40 | 0.065 | 0.78 | 1.56 | 0.46 |
| Cumulative part.size distri.(%) by SA-CP-2 | | | | | |
| - 6 ( μm) | 7.7 | 0 | 0 | 1.8 | 0.3 |
| 6 - 5 | 14.8 | 0 | 1.1 | 4.7 | 0.9 |
| 5 - 4 | 26.8 | 0.9 | 2.2 | 7.3 | 1.5 |
| 4 - 3 | 54.9 | 2.0 | 4.1 | 13.3 | 2.2 |
| 3 - 2 | 90.9 | 4.1 | 8.7 | 31.8 | 4.1 |
| 2 - 1 | 100.0 | 9.9 | 40.5 | 75.3 | 14.3 |
| 1 - 0.8 | | 13.6 | 59.6 | 83.7 | 22.2 |
| 0.8 - 0.6 | | 22.3 | 76.2 | | 37.9 |
| 0.6 - 0.5 | | 31.2 | 83.9 | | 49.2 |
| 0.5 - 0.4 | | 47.6 | 100.0 | | 64.5 |
| 0.4 - 0.3 | | 72.2 | | | 79.9 |
| 0.3 - 0.2 | | 92.6 | | | 89.3 |
| 0.2 - | | 100.0 | | | 100.0 |
| 50% wt.avg.of part. size dist. $d_1$ (μm) | 3.17 | 0.39 | 0.90 | 1.58 | 0.59 |
| $R_1$ (= $d_1/D_1$) | 7.93 | 6.0 | 1.15 | 1.01 | 1.28 |

Example 1

A press cake (solids content 60%) obtained by dehydrating the calcium carbonate A (an aqueous dispersion of it with a solids concentration of 16.8%) by using a filter press was placed into an externally heated treating vessel, the surface treating agent 1 was added to the aforesaid press cake in an amount of 1 weight % (as 100% pure) of the solids content of calcium carbonate and after subsequent intensive stirring at 70 °C a concentrated slurry of surface-treated calcium carbonate with a solids concentration of 60% was obtained.

The concentrated slurry of surfacetreated calcium carbonate was pulverized after the drying by a spray dryer, and the thus surface-treated powder of the calcium carbonate A was obtained.

50 kg of this surface-treated powder of the calcium carbonate A was poured into 50 kg of ethylene glycol (Fiber Grade A of Mitsubishi Petrochemical Co., Ltd.) to prepare an ethylene glycol slurry as material to be wet-ground. This slurry was passed through a wet grinder (Dynomill Pilot-type of WAB Ltd., medium: glass beads 0.6-0.9 mm ϕ, medium charging rate 80%, running speed 1,500 rpm.) twice for wet grinding, yielding an ethylene glycol dispersion of the

calcium carbonate A.

Example 2

In ethylene glycol dispersion of the calcium carbonate A was prepared in the same manner as described above in Example 1 except that the surface treating agent 2 was used instead of the surface treating agent 1.

Example 3

An ethylene glycol dispersion of the calcium carbonate A was prepared in the same manner as described above in Example 1 except that the surface treating agent 3 was used instead of the surface treating agent 1 and that the amount of the surface treating agent added was changed to 2 weight %.

Example 4

An ethylene glycol dispersion of the calcium carbonate A was prepared in the same manner as described in Example 3 except that the surface treating agent 4 was used instead of the surface treating agent 3.

Example 5

An ethylene glycol dispersion of the calcium carbonate A was prepared in the same manner as described in Example 1 except that the surface treating agent 3 was used instead of the surface treating agent 1 and that the surface treating temperature was changed to 40 °C.

Example 6

10 kg of the pulverized calcium carbonate B was charged into a super mixer (SMV-20 of Kawaguchi Seisakusho Ltd.) and with the powder being fluidized by stirring with the stirring blades inside the mixer running at a speed of 1,200 rpm, the surface treating agent 5 was added to the calcium carbonate B in an amount of 0.8 weight % (as 100% pure). Stirring was continued for 15 minutes at a treating temperature of 80°C, yielding the surface-treated calcium carbonate B.

10 kg of this surface-treated powder of the calcium carbonate B was poured into 10 kg of ethylene glycol under stirring and an ethylene glycol dispersion of the calcium carbonate B was obtained in otherwise the same manner as described above in Example 1.

Example 7

An ethylene glycol dispersion of the calcium carbonate B was prepared in the same manner as described in Example 6 except that the surface treating agent 6 was used instead of the surface treating agent 5.

Example 8

70 kg of the calcium carbonate B was suspended in 30 liters of water. To this aqueous suspension the surface treating agent 7 was added in an amount of 1.5 weight % (as 100% pure) based on the solids content of calcium carbonate and by subsequent intensive stirring at a surface treating temperature of 50 °C a concentrated slurry of surface-treated calcium carbonate with a solids concentration of 70% was obtained.

Then, this concentrated slurry of the surface-treated calcium carbonate was passed through a wet grinder (same as used in Example 1) at a rate of 1 liter/minute for wet grinding. The concentrated slurry of the surface-treated calcium carbonate was pulverized after drying by the spray dryer and a surface-treated powder of the calcium carbonate B was thus obtained.

50 kg of this surface-treated calcium carbonate B was poured into 50 kg of ethylene glycol, and an ethylene glycol dispersion of the calcium carbonate B was obtained in otherwise the same manner as described above in Example 1.

Control example 1

An ethylene glycol dispersion of the calcium carbonate A was prepared in the same manner as in Example 1 except that the surface treating agent 9 was used instead of the surface treating agent 1.

Control example 2

30 kg of the calcium carbonate B was suspended in 70 liters of water, a warm dilute solution of the surface treating agent 10 was added to this aqueous suspension in an amount of 3 weight % (as 100% pure) based on the solids content of calcium carbonate and after intensive stirring, it was dehydrated using a filter press. The resulting press cake (solids concentration 68%) was dried by a paddle dryer and pulverized by a dry pulverizer. A surface-treated powder of the calcium carbonate B was thus obtained.

20 kg of this surface-treated powder of the calcium carbonate B was poured into 30 kg of ethylene glycol and stirred, and an ethylene glycol dispersion of the calcium carbonate B was obtained in otherwise the same manner as described in Example 1.

Control example 3

An ethylene glycol dispersion of the calcium carbonate B was prepared in the same manner as described above in Example 1 except that 50 kg powder of non-surface-treated calcium carbonate B was poured into 50 kg of ethylene glycol and subsequently stirred.

Control example 4

An ethylene glycol dispersion of the calcium carbonate A was prepared in the same manner as described above in Example 1 except that a mixture of the surface treating agent 9 and the surface treating agent 11 (an equimolar mixture with no addition of polymerization initiator) was used instead of the surface treating agent 1.

Example 9

An aqueous dispersion of the precipitated calcium carbonate D (solids concentration 14.9%) was dehydrated using a filter press, the resulting press cake (solids concentration 60%) was placed into an externally heated treating vessel and to this press cake the surface treating agent 1 was added in an amount of 1 weight % (as 100% pure) based on the solids content of calcium carbonate and by subsequent intensive stirring at a surface treating temperature of 70°C a concentrated slurry of surface-treated calcium carbonate with a solids concentration of 60% was prepared.

The concentrated slurry of surface-treated calcium carbonate was pulverized after drying by a spray dryer, and thus a surface-treated powder of the precipitated calcium carbonate D was obtained. 50 kg of this surface-treated powder of the precipitated calcium carbonate D was poured into 50 kg of ethylene glycol (Fiber Grade A of Mitsubishi Petrochemical Co., Ltd.) under stirring to prepare an ethylene glycol slurry for wet grinding, this slurry was passed though the wet grinder (Dynomill Pilot-type of WAB Ltd., medium: glass beads 0.5-0.9 mm ϕ, medium charging rate 80%, running speed 1,500 rpm, hereinafter the same) at a rate of 120 ml/minute for wet grinding. Thus an ethylene glycol dispersion of the precipitated calcium carbonate D was prepared. The measurement results of the particle size distribution obtained using SA-CP-2 and the 50% weight average diameter $d_2$, $S_2$, $D_2$ and $R_2$ calculated from the measured particle size distribution are shown in Table 3. An electron microscopic picture taken of the aforesaid dispersion is shown in Figure 9 (x 10,000) and in Figure 10 (x 300). As can be seen from the Table 3, Figure 9 and Figure 10, the ethylene glycol dispersion of the calcium carbonate D is relatively uniform in particle size, its portion of unnecessarily fine particles was small and it was confirmed that there was no presence of coarse particle 2-3 μm in size.

Example 10

An ethylene glycol dispersion of the precipitated calcium carbonate E was prepared in the same manner as described above in Example 9 except that the precipitated calcium carbonate E was used instead of the precipitated calcium carbonate D and that the surface treating agent 3 was used instead of the surface treating agent 1. The result of measurement of particle size distribution of this dispersion namely $d_2$, $S_2$, $D_2$ and $R_2$, using SA-CP-2, is shown in Table 3. An electron microscopic picture of this ethylene glycol dispersion is shown in Figure 11 (x 10,000).

Example 11

An ethylene glycol dispersion of the precipitated calcium carbonate F was prepared in the same manner as described above in Example 9 except that the precipitated calcium carbonate F was used instead of the precipitated calcium carbonate D, that the surface treating agent 6 was used instead of the surface treating agent 1 and that the wet grinder passing rate of the ethylene glycol slurry was increased from 120 ml/minute to 250 ml/minute. The result of measurement of particle size distribution of this dispersion, namely $d_2$, $S_2$, $D_2$ and $R_2$ using SA-CP-2 is shown in

Table 3.

Example 12

An ethylene glycol dispersion of the calcium carbonate of the precipitated calcium carbonate D was prepared in the same manner as described above in Example 9 except that the surface treating agent 8 was used instead of the surface treating agent 1. The result of measurement of particle size distribution of this dispersion namely $d_2$, $S_2$, $D_2$ and $R_2$, using SA-CP-2 is shown in Table 3.

Example 13

An ethylene glycol dispersion of the precipitated calcium carbonate E was prepared in the same manner as described above in Example 10 except that in the wet grinding process the ethylene glycol slurry used as material to be wet-ground was passed through the wet grinder three times at a rate of 60 ml/minute. The result of measurement of particle size distribution of this dispersion, namely $d_2$, $S_2$, $D_2$ and $R_2$, using SA-CP-2, is shown in Table 3. Also an electron microscopic picture (x 10,000) of the dispersion is shown in Figure 12.

Example 14

An aqueous dispersion of the precipitated calcium carbonate C (solids concentration 14.9%) was dehydrated using a filter press, the resulting press cake (solids concentration 57%) was placed into an externally heated treating vessel and to this press cake the surface treating agent 1 was added in an amount of 2 weight % (as 100% pure) based on the solids content of the calcium carbonate and by subsequent intensive stirring at a surface treating temperature of 70 °C a concentrated slurry of surface-treated precipitated calcium carbonate with a solids concentration of 57% was prepared.

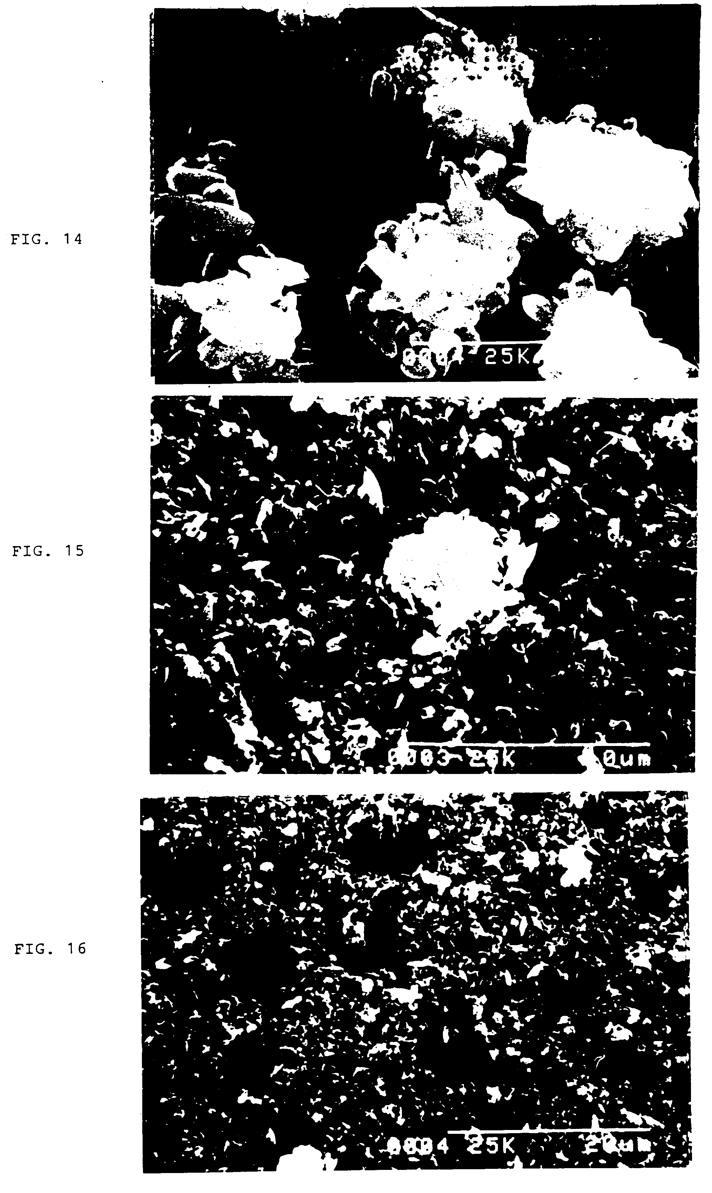

The concentrated slurry of the surface-treated calcium carbonate was pulverized after drying by a spray dryer, and thus a surface-treated powder of the precipitated calcium carbonate C was obtained. 30 kg of the surface-treated powder of the precipitated calcium carbonate C was poured into 70 kg of ethylene glycol under stirring to prepare an ethylene glycol slurry as wet grinding material. This slurry was passed through a wet-grinder twice at a rate of 60 ml/minute for wet grinding, and an ethylene glycol dispersion of the precipitated calcium carbonate C was prepared. The result of measurement of particle size distribution of this dispersion, namely $d_2$, $S_2$, $D_2$ and $R_2$,using SA-CP-2 is shown in Table 3. Also, an electron microscopic picture of the dispersion (x 10,000) is shown in Figure 13.

Control example 5

An aqueous dispersion of the calcium carbonate A (solids concentration 16.8%) was dehydrated using a filter press. The resulting press cake was pulverized after drying by a paddle dryer and 50 kg of dry powder of the precipitated calcium carbonate A was obtained. 50 kg of this precipitated calcium carbonate A was poured into 50 kg of ethylene glycol (Fiber Grade A of Mitsubishi Petrochemical Co., Ltd,) to prepare an ethylene glycol slurry for wet grinding. This slurry was passed through a wet-grinder twice at a rate of 60 ml/minute, and an ethylene glycol dispersion of the precipitated calcium carbonate A was prepared. The result of measurement of particle size distribution of this dispersion, namely $d_2$, $S_2$, $D_2$ and $R_2$, using SA-CP-2, is shown in Table 3. An electron microscopic picture (x 5,000) of the dispersion is shown in Figure 15, another electron microscopic picture (x 2,000) is shown in Figure 16, and an electron microscopic picture (x 10,000 of the precipitated calcium carbonate A as wet ground material is shown in Figure 14 respectively.

The results shown in Table 3 and Figures 14, 15 and 16, confirm that the ethylene glycol dispersion of the precipitated calcium carbonate A, which was obtained by wet grinding the precipitated calcium carbonate A with $R_1$>7 (See Figure 1.), which means that cohesiveness between primary particles is extremely high and larger secondary particles are likely to be formed, contained coarse secondary particles approximately 5µm in size, despite the fact that in the wet grinding process for the ethylene glycol system the grinding conditions used were 4 times more intensive than in Example 9.

Application example 1: Long-term stability of the ethylene glycol dispersion

1 liter each of the ethylene glycol dispersions of the calcium carbonate prepared in Examples 1-14 and Control examples 1-5 was placed into a a measuring cylinder and after being allowed to stand for 60 days, the separation in the ethylene glycol dispersion of calcium carbonate between calcium carbonate and ethylene glycol and the calcium carbonate precipitated as deposit on the bottom thereof was observed. The result is shown in Table 2.

The criteria for evaluation are as follows:

- ○ : Separation between calcium carbonate and ethylene glycol is scarcely noticeable and the calcium carbonate deposited on the bottom of the measuring cylinder is soft and easily redispersible.
- Δ : Separation between calcium carbonate and ethylene glycol is noticeable but the calcium carbonate deposited on the bottom of the measuring cylinder is relatively soft and relatively easily redispersible.
- × : Separation between calcium carbonate and ethylene glycol is very noticeable and the calcium carbonate deposited on the bottom of the measuring cylinder is difficult to redisperse.

Application example 2: Affinity of calcium carbonate particles to PET resin

100 weight parts of dimethyl phthalate and 70 weight parts of ethylne glycol were subjected to an ester exchange reaction in a usual manner with 0.035 parts of tetrahydrate of manganese acetate as catalyst, and to this each of the ethylene glycol dispersions of calcium carbonate prepared in Examples 1-14 and Control examples 1-5 was added under stirring until the calcium carbonate concentration in the polymer reached 5,000 ppm. Then, polycondensation was carried out in a usual manner in vacuum at a high temperature and polyethylene terephthalate having the intrinsic viscosity of 0.630 was thus obtained. Each of these polymers was molten at 290°C and then extruded, and after stretching 3.5 times longitudinally at 90 °C and 3.5 times laterally at 130 °C, heat treatment was carried out at 220 °C and thus a film 15 μm thick was obtained. Each film had its surface layer of polymer removed by etching to reveal calcium carbonate and the affinity of calcium carbonate to polyester was evaluated by measuring the diameter of the void (Dv) and the diameter of calcium carbonate particle (Dc) through a scanning type electron microscope (x 20,000). The results are shown in Table 2. The evaluation criteria are as follows;

- ◎: $1 \leqq Dv/Dc < 1.2$
  Voids are absent or extremely small, if any.
- ○ : $1.2 \leqq Dv/Dc < 1.5$
- Δ : $1.5 \leqq Dv/Dc < 3.0$
- × : $3.0 \leqq Dv/Dc < 4.0$

Application example 3: Filtrability of ethylene glycol dispersion

400 ml each of 10 weight % dilute solid solutions of the ethylene glycol dispersions prepared in the Examples 9-14 and Control example 5 was prepared by further dilution with ethylene glycol. Upon its preparation and 24 hours thereafter 200 ml of each 10 weight % dilute solid solution was filtrated under pressure of 2 bar (2 kg/cm$^2$) through a 8 μm-thick membran filter (manufactured by Milipore Inc.) and its passing rate was measured. The results are shown in Table 3.

Application example 4: Dispersibility of calcium carbonate in PET resin

Of the polymers prepared in Application example 2, each of those prepared using the ethylene glycol dispersions of calcium carbonate obtained in Examples 9-14 and Control example 5 was put between two sheets of cover glass, melt-pressed at 280°C and after subsequent quenching, was examined through a microscope. The dispersibility of the particles in the polymer was evaluated, with agglomeration of a plurality of primary particles being regarded as formation of coarse particles. As to the dispersibility of the particles, the number of coarse particles more than 4 times larger than the average primary particle size present in 1 mm$^2$ were counted and evaluation was made according to the following criteria. The results are shown in Table 3. The 50% weight average diameter $d_2$ of particle size distribution was taken as avearge primary particle size.

- ◎: When the number of coarse particles are not more than 10 pieces/mm$^2$
- ○ : When the number of coarse particles are not less than 11 pieces/mm$^2$ and not more than 30 pieces/mm$^2$
- Δ : When the number of coarse particles are not less than 31 pieces/mm$^2$ and not more than 50 pieces/mm$^2$
- × : When the number of coarse particles are not less than 51 pieces/mm$^2$

Table 2

| | Result of Application example 1 | Result of Application example 2 |
|---|---|---|
| Example 1 | ○ | ◎ |

Table 2 (continued)

| | Result of Application example 1 | Result of Application example 2 |
|---|---|---|
| 2 | ○ | ◎ |
| 3 | ○ | ◎ |
| 4 | ○ | ◎ |
| 5 | ○ | ◎ |
| 6 | ○ | ◎ |
| 7 | ○ | ◎ |
| 8 | ○ | ○ |
| 9 | ○ | ◎ |
| 10 | ○ | ◎ |
| 11 | ○ | ◎ |
| 12 | ○ | ◎ |
| 13 | ○ | ○ |
| 14 | ○ | ○ |
| Control example 1 | ○ | Δ |
| 2 | Δ | Δ |
| 3 | × | × |
| 4 | ○ | Δ |
| 5 | × | × |

Table 3

| | Example | | | | | | Control example |
|---|---|---|---|---|---|---|---|
| | 9 | 10 | 11 | 12 | 13 | 14 | 5 |
| Spec.sur.area $S_2$ by BET method ($cm^2/g$) | 76700 | 32900 | 131600 | 75300 | 173000 | 421000 | 118000 |
| D2 calculated from $S_2$(μm) | 0.29 | 0.68 | 0.17 | 0.30 | 0.13 | 0.053 | 0.18 |
| Part.size distribution (%) | | | | | | | |
| - 6(μm) | 0 | 0.8 | 0 | 0 | 1.5 | 1.1 | 0 |
| 6 - 5 | 0.5 | 1.8 | 0 | 0.5 | 2.4 | 1.3 | 0.2 |
| 5 - 4 | 1.1 | 4.1 | 0.2 | 1.2 | 5.3 | 1.5 | 0.7 |
| 4 - 3 | 2.1 | 7.5 | 0.9 | 2.4 | 8.1 | 1.7 | 1.4 |
| 3 - 2 | 6.8 | 16.9 | 1.1 | 6.9 | 17.3 | 3.0 | 3.5 |
| 2 - 1 | 21.0 | 57.6 | 6.5 | 22.1 | 40.5 | 6.8 | 12.0 |
| 1 - 0.8 | 39.0 | 75.2 | 10.4 | 41.3 | 63.3 | 8.1 | 18.7 |
| 0.8-0.6 | 62.7 | 86.7 | 21.1 | 64.0 | 71.4 | 12.3 | 30.8 |
| 0.6-0.5 | 74.3 | 100.0 | 30.7 | 75.0 | 78.5 | 14.6 | 41.4 |
| 0.5-0.4 | 86.8 | - | 46.9 | 86.5 | 82.8 | 21.3 | 56.4 |
| 0.4-0.3 | 100.0 | - | 65.4 | 100.0 | 89.8 | 60.7 | 75.5 |
| 0.3-0.2 | - | - | 89.2 | - | 100.0 | 72.9 | 100.0 |
| 0.2- | - | - | 100.0 | - | - | 100.0 | - |
| 50% avg.dia.of particle size distribution $d_2$(μm) | 0.707 | 1.187 | 0.383 | 0.723 | 0.917 | 0.327 | 0.433 |
| $R_2$ ($D_1/D_2$) | 2.69 | 2.29 | 2.71 | 2.60 | 12.0 | 1.22 | 2.22 |
| Result of App.Exam.3 passing rate immedatly after preparation (ml) | 200 | 200 | 200 | 200 | 200 | 180 | 140 |
| passing rate 24 hrs. after preparation(ml) | 200 | 200 | 200 | 200 | 165 | 150 | 100 |
| Result of Applica. Exam.4 | ◎ | ◎ | ◎ | ◎ | X | X | X |

As mentioned above, the glycol dispersion of the calcium carbonate according to the present invention features good dispersion stability of calcium carbonate in glycol and also good affinity to the polyester in polyester products manufactured therefrom, thus contributing to improving the surface property of the polyester.

Furthermore, since the glycol dispersion of calcium carbonate prepared using a specific grade of calcium carbonate under specific conditions has a particularly high dispersibility in glycol as well as uniformity of particle size in addition to the aforesaid features, it is well suited for use in the manufacture of high quality and high performance polyester products.

## Claims

1. A glycol dispersion consisting of calcium carbonate and glycol prepared by wet grinding a glycol slurry composed of glycol and a material in powder form to be wet-ground, wherein said material to be wet-ground is calcium carbonate surface-treated with (A) a copolymer of at least one α,β-monoethylenically unsaturated carboxylic acid or a salt thereof with at least one α,β-monoethylenically unsaturated carboxylic acid ester and/or (B) a salt of a copolymer of at least one α,β-monoethylenically unsaturated carboxylic acid with at least one α,β-monoethylenically unsaturated carboxylic acid ester.

2. The glycol dispersion of claim 1, obtainable by a surface-treatment of precipitated calcium carbonate meeting the requirements described below in (a) and (b), followed by wet-grinding a glycol slurry of said surface-treated precipitated calcium carbonate under the conditions described below in (c):

   (a) The primary particle size $D_1$ calculated by the following formula (1) from the specific surface area $S_1$ measured by the BET method is not less than 0.1 μm.

$$Dx = 60{,}000/2.7\ Sx \qquad (1)$$

   wherein,

   Dx: is the average particle size (μm) of precipitated calcium carbonate calculated from the specific surface area measured by the BET method, and

   Sx: is the specific surface area ($cm^2/g$) of precipitated calcium carbonate measured by the BET method

   (b) The ratio ($R_1$) of the 50% weight average particle size $d_1$ of particle size distribution measured in an aqueous medium using a Light Transmission Centrifugal Precipitation-Type Particle Size Distribution Measuring Device to the aforesaid $D_1$ satisfies the following formula (2).

$$R_1 = d_1/D_1 \leqq 7 \qquad (2)$$

   (c) The ratio ($R_2$) of the aforesaid primary particle size $D_1$ to the primary particle size $D_2$ calculated by the aforesaid formula (1) from the specific surface area $S_2$ of wet-ground precipitated calcium carbonate measured by the BET method satisfies the following formula (3).

$$R_2 = D_1/D_2,\ 1 < R_2 \leqq 10 \qquad (3)$$

3. A glycol dispersion of claim 1, wherein the proportion of the α,β-monoethylenically unsaturated carboxylic acid ester to the copolymer as a whole is not less than 2 mol % and not more than 95 mol %.

4. A glycol dispersion of claim 1, wherein the amount of the surface treating agent is not less than 0.01 weight % and not more than 30 weight % (as 100% pure) based on the amount of calcium carbonate.

## Patentansprüche

1. Glycoldispersion, bestehend aus Calciumcarbonat und Glycol, hergestellt durch Naßmahlen einer Glycolaufschlämmung, die aus Glycol und einem naßzumahlenden Material in Pulverform besteht, wobei das naßzumahlende Material Calciumcarbonat ist, das mit (A) einem Copolymer von mindestens einer α,β-monoethylenisch ungesättigten Carbonsäure oder deren Salz mit mindestens einem α,β-monoethylenisch ungesättigten Carbonsäureester und/oder (B) einem Salz eines Copolymers von mindestens einer α,β-monoethylenisch ungesättigten Carbonsäure mit mindestens einem α,β-monoethylenisch ungesättigten Carbonsäureester oberflächenbehandelt ist.

2. Glycoldispersion nach Anspruch 1, erhältlich durch eine Oberflächenbehandlung von gefälltem Calciumcarbonat, das die nachstehend unter (a) und (b) beschriebenen Anforderungen erfüllt, und anschließendes Naßmahlen einer Glycolaufschlämmung des oberflächenbehandelten, gefällten Calciumcarbonats bei den nachstehend unter (c) beschriebenen Bedindungen:

   (a) die Größe der Primärteilchen $D_1$, die nach der nachstehenden Formel (1) aus der spezifischen Oberfläche $S_1$ berechnet wird, die nach der BET-Methode gemessen wird, ist nicht geringer als 0,1 µm,

$$Dx = 60.000/2,7\ Sx \qquad (1),$$

   worin:

   Dx: die mittlere Teilchengröße (µm) des gefällten Calciumcarbonats ist, die aus der spezifischen Oberfläche berechnet wird, die nach der BET-Methode gemessen wird, und
   Sx: die spezifische Oberfläche ($cm^2/g$) des gefällten Calciumcarbonats ist, die nach der BET-Methode gemessen wird;

   (b) Das Verhältnis ($R_1$) der mittleren Teilchengröße bei 50% $d_1$ der Teilchengrößenverteilung, die in einem wäßrigen Medium mit dem Meßgerät für die Teilchengrößenverteilung vom Lichtdurchlässigkeits-Zentrifugalfällungs-Typ gemessen wird, zum vorstehenden Wert $D_1$ erfüllt nachstehende Formel (2):

$$R_1 = d_1/D_1 \leq 7 \qquad (2);$$

   (c) das Verhältnis $R_2$ der vorstehenden Größe der Primärteilchen $D_1$ zur Größe der Primärteilchen $D_2$, die nach der vorstehenden Formel (1) aus der spezifischen Oberfläche $S_2$ des naßgemahlenen, gefällten Calciumcarbonats berechnet wird, die nach der BET-Methode gemessen wird, erfüllt nachstehende Formel (3):

$$R_2 = D_1/D_2,\ 1 < R_2 \leq 10 \qquad (3).$$

3. Glycoldispersion nach Anspruch 1, wobei der Anteil des α,β-monoethylenisch ungesättigten Carbonsäureesters zum Copolymer insgesamt nicht weniger als 2 Mol-% und nicht mehr als 95 Mol-% beträgt.

4. Glycoldispersion nach Anspruch 1, wobei die Menge des Oberflächenbehandlungsmittels nicht weniger als 0,01 Gew.-% und nicht mehr als 30 Gew.-% (als 100% rein) auf der Basis der Menge an Calciumcarbonat beträgt.

## Revendications

1. Dispersion glycolique constituée de carbonate de calcium et de glycol, préparée par broyage humide d'une suspension glycolique épaisse composée de glycol et d'un produit sous forme pulvérulente à soumettre au broyage humide, dans laquelle ledit produit à soumettre au broyage humide est du carbonate de calcium traité en surface avec (A) un copolymère d'au moins un acide carboxylique à insaturation monoéthylénique en α,β ou d'un de ses sels et d'au moins un ester d'acide carboxylique à insaturation monoéthylénique en α,β et/ou (B) un sel d'un copolymère d'au moins un acide carboxylique à insaturation monoéthylénique en α,β et d'au moins un ester d'acide

carboxylique à insaturation monoéthylénique en $\alpha,\beta$.

2. Dispersion glycolique selon la revendication 1, pouvant être obtenue par un traitement de surface de carbonate de calcium précipité répondant aux exigences décrites ci-dessous en (a) et (b), suivi d'un broyage humide d'une suspension épaisse dans le glycol dudit carbonate de calcium précipité traité en surface dans les conditions décrites ci-dessous en (c):

(a) la grosseur de particules primaires $D_1$, calculée par la formule (1) ci-dessous à partir de la surface spécifique $S_1$ mesurée par la méthode BET, n'est pas inférieure à 0,1 µm.

$$D_x = 60\,000/2{,}7\ S_x \qquad (1)$$

dans laquelle $D_x$ est la grosseur de particules moyenne (µm) du carbonate de calcium précipité calculée à partir de la surface spécifique mesurée par la méthode BET, et $S_x$ est la surface spécifique ($cm^2/g$) du carbonate de calcium précipité mesurée par la méthode BET.

(b) Le rapport ($R_1$) de la grosseur de particules moyenne d'un poids de 50 % $d_1$ de la répartition granulométrique, mesurée en milieu aqueux à l'aide d'un dispositif de mesure de la répartition granulométrique du type à précipitation centrifuge et transmission de lumière, à la grandeur $D_1$ précédente satisfait à la formule (2) ci-dessous:

$$R_1 = d_1/D_1 \leq 7 \qquad (2).$$

(c) le rapport ($R_2$) de la grosseur de particules primaires $D_1$ précitée à la grosseur de particules primaires $D_2$ calculée par la formule (1) précitée à partir de la surface spécifique $S_2$ du carbonate de calcium précipité ayant subi le broyage humide, mesurée par la méthode BET, satisfait à la formule (3) ci-dessous:

$$R_2 = D_1/D_2,\ 1 < R_2 \leq 10 \qquad (3).$$

3. Dispersion glycolique selon la revendication 1, dans laquelle la proportion d'ester d'acide carboxylique à insaturation monoéthylénique en $\alpha,\beta$ dans le copolymère total est d'au moins 2 % en mol et d'au plus 95 % en mol.

4. Dispersion glycolique selon la revendication 1, dans laquelle la quantité d'agent de traitement de surface est d'au moins 0,01 % en masse et d'au plus 30 % en masse (en tant que produit pur à 100 %) par rapport à la quantité de carbonate de calcium.

FIG. 1

FIG. 2

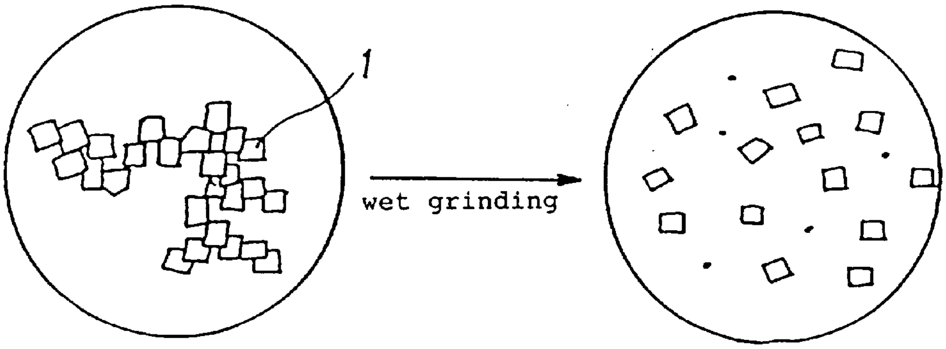


FIG. 3

FIG. 4

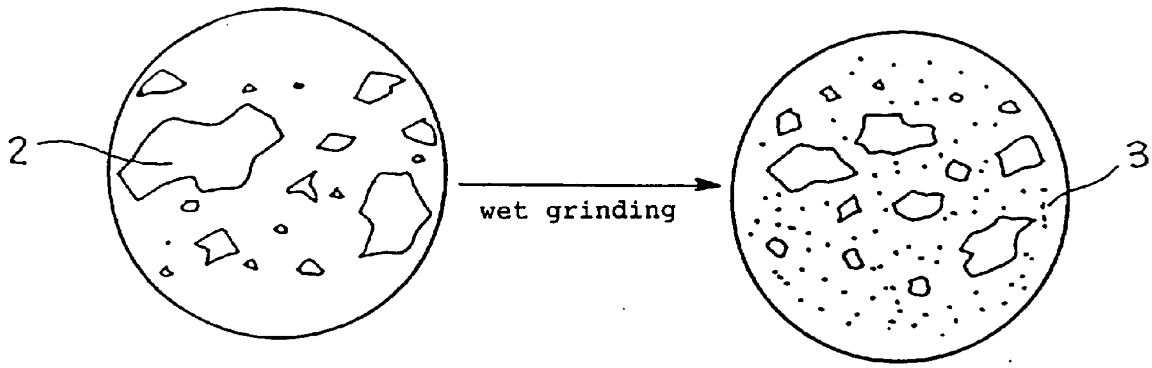


FIG. 6

FIG. 5

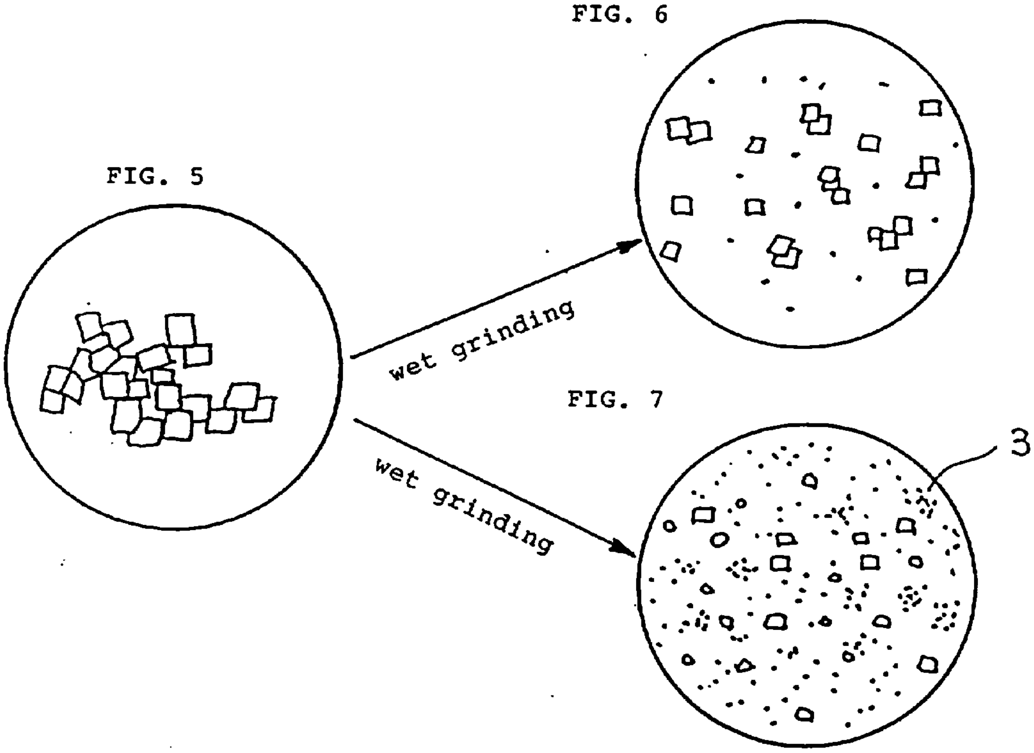


FIG. 7

FIG. 8

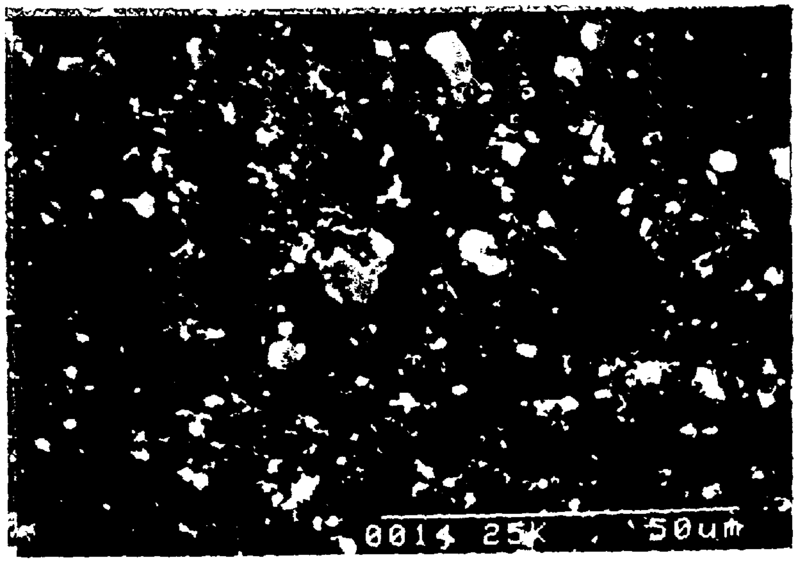


FIG. 9

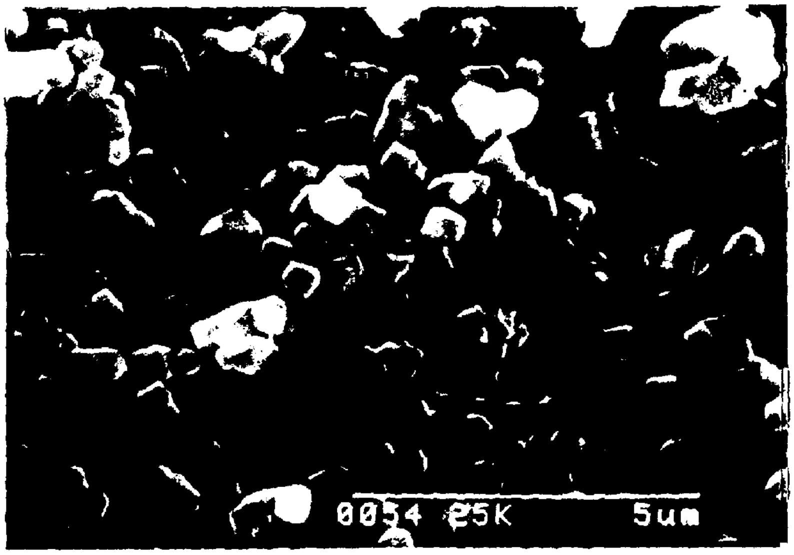


FIG. 10

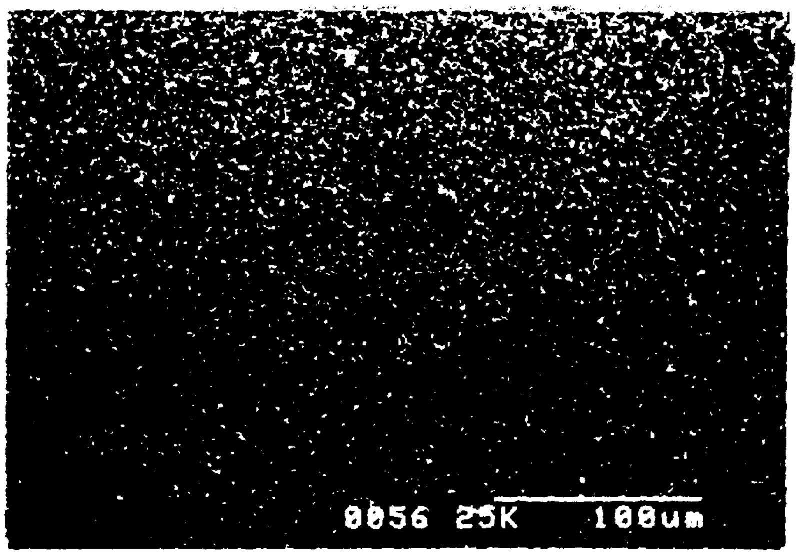

FIG. 11

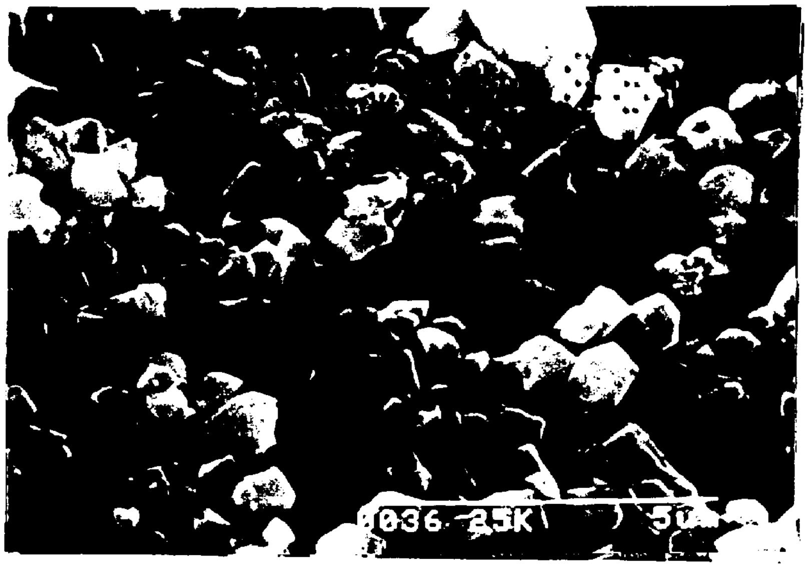

FIG. 12

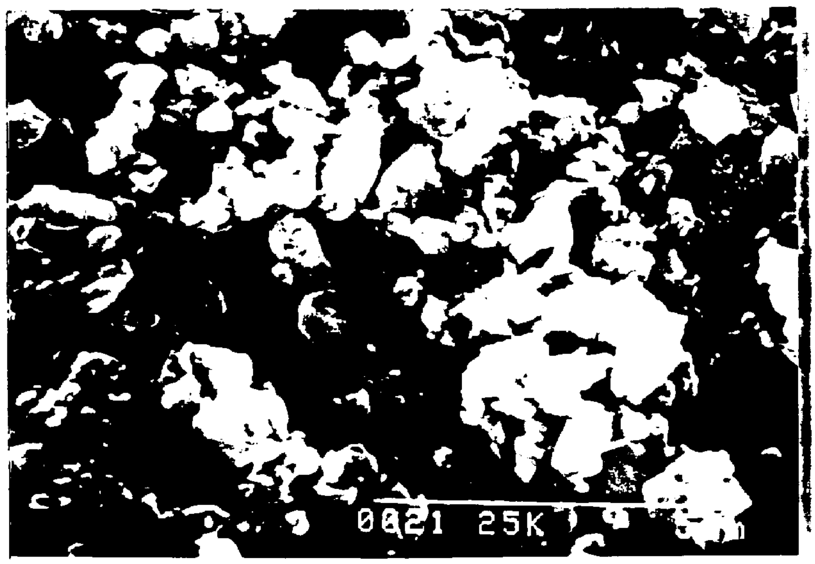

FIG. 13

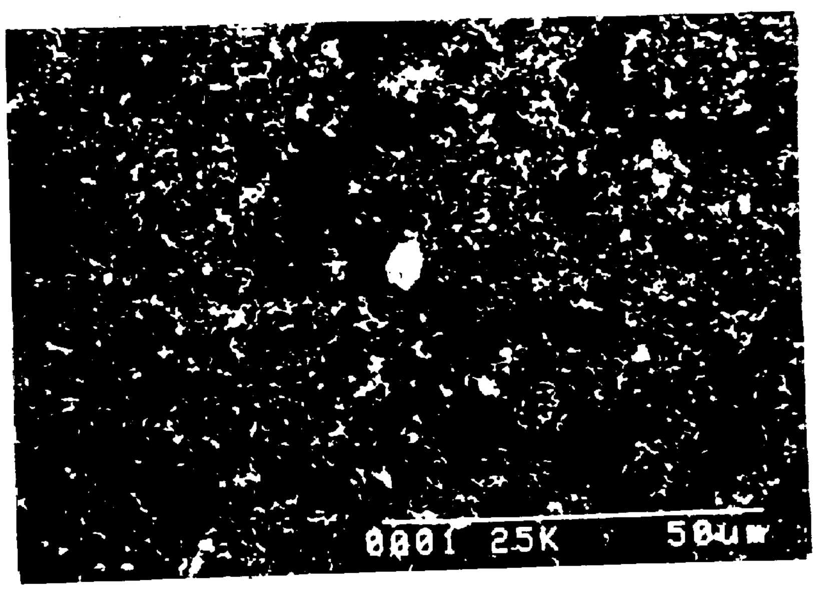

FIG. 14

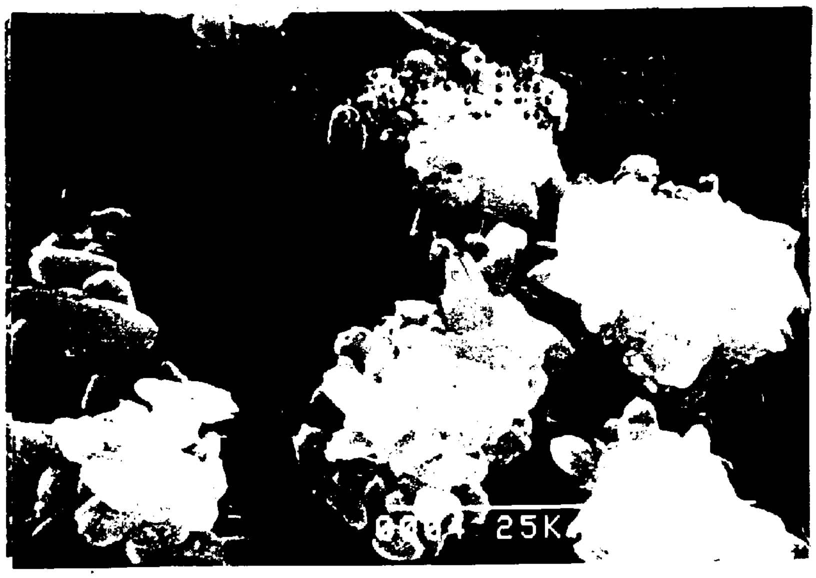


FIG. 15

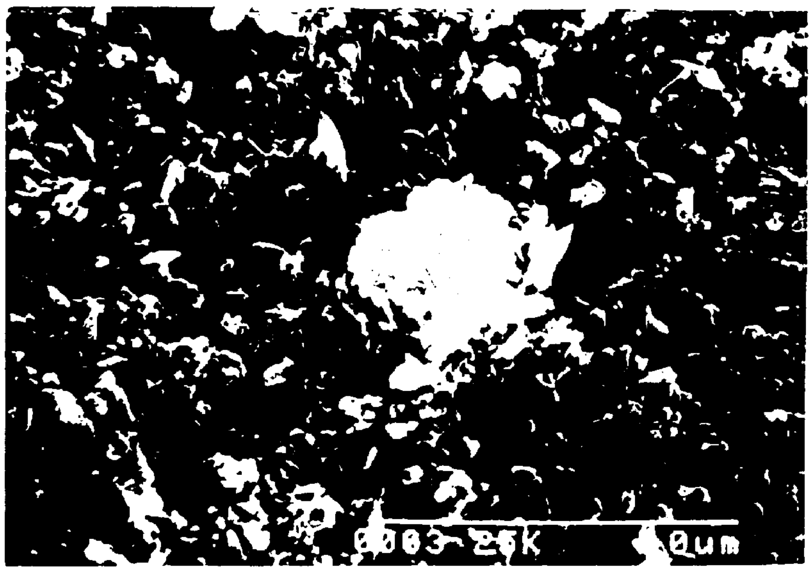


FIG. 16